# EUROPÄISCHE PATENTSCHRIFT

(11) **EP 2 733 091 B1**
(45) Veröffentlichungstag und Bekanntmachung des Hinweises auf die Patenterteilung: **30.08.2017**
(21) Anmeldenummer: 13193239.4
(22) Anmeldetag: 18.11.2013
(51) Int. Cl.: B65G 15/14

(54) **Vorrichtung zum Fördern mindestens eines Formteils in einer Getränkeabfüllanlage**
Device for conveying at least one moulded part in a beverage bottling machine
Dispositif d'acheminement d'au moins une pièce moulée dans une installation de remplissage de boissons

(30) Priorität: 19.11.2012 DE 202012104467 U
(43) Veröffentlichungstag der Anmeldung: 21.05.2014
(73) Patentinhaber: KRONES AG, 93073 Neutraubling (DE)
(72) Erfinder: Buchhauser, Klaus, 93073 Neutraubling (DE)
(74) Vertreter: Nordmeyer, Philipp Werner

(56) Entgegenhaltungen:
- EP-A1- 2 151 287
- DE-A1- 2 414 386
- DE-A1- 4 124 061
- FR-A1- 2 285 317
- FR-A1- 2 683 213
- US-A- 4 802 571
- US-A- 5 853 080
- US-A1- 2006 269 648
- US-B1- 7 232 029
- US-B1- 8 276 741

## Beschreibung

### Technisches Gebiet

Die vorliegende Erfindung betrifft eine Vorrichtung zum Fördern mindestens eines Behälterverschlusses in einer Getränkeabfüllanlage nach dem Oberbegriff des Anspruchs 1.

### Stand der Technik

In Getränkeabfüllanlagen ist es häufig notwendig, Formteile von einem ersten Anlagenniveau auf ein zweites Anlagenniveau zu fördern. So werden Behälterverschlüsse, beispielsweise Kunststoffschraubverschlüsse, welche zum Verschließen von PET-Flaschen verwendet werden, üblicherweise in Bodennähe sortiert und lagerichtig ausgerichtet. Danach werden sie von dem bodennahen Anlagenniveau auf ein höher gelegenes Anlagenniveau gefördert, um dann über entsprechende Zuführvorrichtungen einem Verschließer der Getränkeabfüllanlage zugeführt zu werden.

Die Behälterverschlüsse werden dabei üblicherweise innerhalb der Getränkeabfüllanlage mittels so genannter Lufttransporteure von dem tiefer gelegenen Niveau auf das höher gelegene Niveau transportiert. Solche Lufttransporteure sind sehr exakt auf die Größe und die Masse der jeweilig zu fördernden Behälterverschlüsse auszulegen, um zum einen eine zuverlässige Förderleistung bereitzustellen und zum anderen einen übermäßigen Verschleiß der Formteile zu vermeiden. Der Energieverbrauch eines solchen Lufttransporteurs ist aufgrund der Verwendung einer Mehrzahl leistungsstarker Gebläse sehr hoch. Weiterhin erreichen die Behälterverschlüsse im Lufttransporteur relativ hohe Geschwindigkeiten, so dass sie beispielsweise beim Befüllen des weiterführenden Transportsystems, mittels welchem die Behälterverschlüsse dann dem Verschließer zugeführt werden, mit recht hohen Geschwindigkeiten aufeinander prallen. Dies kann insbesondere auch nach Anlagenstörungen der Fall sein, bei welchen sich quasi ein Pfropf bildet, welcher dann nach Behebung der Anlagenstörung schlagartig abgeräumt wird. Durch die Kollision mit dem entsprechend relativ hohen Impuls kann es zu Beschädigungen der Formteile kommen.

Durch die mit recht hohen Geschwindigkeiten aufeinander prallenden Formteile kann es auch an den Stoßstellen der jeweiligen verschlussführenden Teile Abrieb geben, welcher sich dann beispielsweise in Fäden an den jeweiligen Anlagenteilen ansammelt und sich in unvorhersehbaren Zeitabständen löst, wodurch die Anlage extrem verschmutzt wird und weitere Störungen verursacht werden.

Weiterhin ist durch die notwendige genaue Führung des Verschlusses und durch die Bereitstellung der unter Druck stehenden Förderluft zum Transportieren der Verschlüsse häufig nur eine eingeschränkte Zugänglichkeit zu den jeweiligen Verschlüssen möglich, so dass im Störungsfall die Behebung der Störung recht aufwändig ist.

Weiterhin ist aufgrund der notwendigen exakten Auslegung des jeweiligen Lufttransporteurs auf die Dimensionen und die Masse der jeweiligen zu fördernden Formteile die Verarbeitung von unterschiedlich großen Formteilen und besonders von unterschiedlich großen Behälterverschlüssen nur bedingt, wenn überhaupt, möglich. Eine nachfolgende Änderung der Verschlussgröße zieht entsprechend aufwändige Rüst- beziehungsweise Umbauarbeiten mit sich.

Aus der DE 1 838 686 ist ein kontinuierlich arbeitender, S-förmig ausgebildeter Flaschensteilförderer mit waagerechten Anfangs- und Endstücken bekannt, welcher die Flaschen zwischen aufblähbaren, endlosen Schlauchpaaren aus elastischem Material führt.

Die US 8,276,741 B1 beschreibt eine Vorrichtung zum Fördern von Behälterverschlüssen nach dem Oberbegriff des Anspruchs 1. Die Verschlüsse werden zwischen zwei zueinander parallel ausgerichteten, kontinuierlich umlaufenden Bändern transportiert, wobei die Bänder Öffnungen zum Ansaugen der Verschlüsse aufweisen.

### Darstellung der Erfindung

Ausgehend von dem bekannten Stand der Technik ist es eine Aufgabe der vorliegenden Erfindung, eine Vorrichtung zum Fördern von Behälterverschlüssen in einer Getränkeabfüllanlage anzugeben, welche ein verschleißarmes Fördern der Behälterverschlüsse ermöglicht.

Diese Aufgabe wird durch die Vorrichtung zum Fördern von Behälterverschlüssen in einer Getränkeabfüllanlage mit den Merkmalen des Anspruchs 1 gelöst. Vorteilhafte Weiterbildungen ergeben sich aus den abhängigen Ansprüchen.

Entsprechend umfasst die Vorrichtung zum Fördern mindestens eines Behälterverschlusses (der auch als Formteil bezeichnet wird) in einer Getränkeabfüllanlage, bevorzugt zum Fördern mindestens eines Behälterschraubverschlusses in einer Getränkeabfüllanlage, mindestens ein elastisches, endloses Klemmband zum Mitnehmen des mindestens einen Formteils, wobei das elastische Klemmband eine Bandkante aufweist. Erfindungsgemäß ist das mindestens eine Formteil zwischen der Bandkante des elastischen Klemmbandes und einem Gegenelement förderbar.

Das elastische Klemmband weist eine Breite auf, und die Höhe der Bandkante senkrecht zur Ebene des Klemmbandes ist geringer, als die Breite des Klemmbandes. Mit anderen Worten wird unter "Band" oder "bandförmig" ein Band verstanden, welches in einer Bandebene breiter ist, als seitlich hoch.

Durch die Anordnung des bandförmigen Klemmelementes derart, dass das Klemmband mit seiner Bandkante die Formteile gegen das Gegenelement einklemmt und damit förderbar macht, kann ein verschleißarmes Fördern erreicht werden, da die Formteile aufgrund der recht schmalen Horizontalausdehnung der Bandkante lediglich in einem begrenzten, horizontalen Bereich des Formteiles gegriffen werden und entsprechend die Angriffsfläche reduziert wird. Weiterhin wird durch die Verwendung des elastischen Klemmbandes an sich bereits eine kontrollierte Förderung der Formteile erreicht, da das einen hohen Impuls aufweisende Fördern in einem Luftförderer entfällt. Vielmehr werden die einzelnen Formteile an einer eindeutigen Stelle des Klemmbandes beabstandet voneinander durch die Bandkante eingeklemmt, so dass ein Zusammenstoßen der jeweiligen Formteile während des Förderprozesses nicht stattfindet. Vielmehr können die Formteile in einem vorgegebenen Abstand zueinander gefördert werden, so dass der Verschleiß durch gegenseitiges Stoßen beziehungsweise gegenseitiges Berühren der Formteile vermieden werden kann.

Weiterhin wird über die Klemmung der Formteile mit der Bandkante des Klemmbands gegen das Gegenelement erreicht, dass Toleranzen in den Dimensionen der Formteile einfach ausgeglichen werden können, da das Klemmband elastisch ausgebildet ist. Entsprechend ist die Auslegung und Justage der vorgeschlagenen Vorrichtung zum Fördern von Formteilen relativ einfach auszuführen, da zum einen Formteile über einen vorgegebenen Bereich an Dimensionen aufgrund der elastischen Ausbildung des Klemmbandes einfach aufgenommen werden können, ohne dass dies eine weitergehende Justage der Vorrichtung erfordern würde. Zum anderen spielen unterschiedliche Massen der Formteile in der vorgeschlagenen Vorrichtung keine Rolle, da, anders als bei einem Luftförderer, die aufzubringenden Kräfte zum Fördern über den direkten Kontakt mit dem Klemmband auf das Formteil ausgeübt werden und entsprechend dessen Masse nicht berücksichtigt werden muss.

Darüber hinaus spielen durch die Klemmung des Formteiles lediglich an einer Bandkante des Klemmbandes, die Dimensionen des Formteils - zumindest in einer Richtung senkrecht zur Ebene des Klemmbandes - keine Rolle. Mit anderen Worten können beispielsweise flache Behälterverschlüsse mit der gleichen Einstellung der Vorrichtung zum Fördern der Formteile gefördert werden, wie normale beziehungsweise hohe Behälterverschlüsse. Dies ist bereits in der Tatsache begründet, dass das elastische Klemmband die jeweiligen Formteile und besonders die Behälterverschlüsse mit der Bandkante einklemmt und entsprechend die Behälterverschlüsse üblicherweise an deren Umfang angreift.

Um einen verschleißarmen Einlauf und einen verschleißarmen Auslauf der Formteile in die Vorrichtung herein beziehungsweise aus der Vorrichtung heraus zu ermöglichen, ist im Bereich des Einlaufs eine Führung für das elastische Klemmband vorgesehen, welche dafür sorgt, dass sich das Klemmband im Bereich des Zulaufs an die ankommenden Formteile stetig annähert, um dann die Formteile einzuklemmen. Entsprechend wird das elastische Klemmband im Bereich des Einlaufes keilförmig beziehungsweise diagonal zur Transportrichtung geführt. Im Bereich des Auslaufes der Formteile wird bevorzugt wiederum eine diagonale Führung des elastischen Klemmbandes derart vorgenommen, dass sich das Klemmband in Transportrichtung von den Formteilen entfernt. Entsprechend können die Formteile im Zulauf sanft gegriffen werden, ohne dass sie aneinander anstoßen und entsprechend keinem hierauf beruhenden Verschleiß unterliegen, und zum anderen können die Verschlüsse geordnet und in einer vorgegebenen Orientierung nacheinander wieder am Auslauf an die nachfolgenden Verarbeitungsstationen übergeben werden.

Um deutliche Abweichungen in den Dimensionen der zu fördernden Formteile und - besonders bei der Förderung von Behälterverschlüssen - des Durchmessers der jeweiligen Behälterverschlüsse anpassen zu können, kann der Abstand des elastischen Klemmbandes von dem Gegenelement auf einfache Weise entsprechend eingestellt und justiert werden, indem die jeweiligen Führungen des Klemmbandes nachjustiert werden. Ein aufwändiger Umbau, wie er bei einem Luftförderer notwendig war, ist hier nicht notwendig, so dass die vorgeschlagene Vorrichtung zum Fördern von Formteilen auch eine besonders flexible und effiziente Handhabung unterschiedlichster Dimensionen und Massen von Formteilen erlaubt, und die entsprechenden Rüstzeiten zu vernachlässigen sind.

In einer bevorzugten Variante wird das Gegenelement durch ein zweites elastisches Klemmband ausgebildet, wobei das Formteil dann wiederum über die Bandkante dieses zweiten elastischen Klemmbandes eingeklemmt wird. Mit anderen Worten wird das entsprechende Formteil dann zwischen den Bandkanten zweier, im Wesentlich parallel zueinander geführter, elastischer Klemmbänder eingeklemmt.

Die Bandkanten der elastischen Klemmbänder sind bevorzugt ebenfalls elastisch ausgebildet, so dass eine elastische Klemmung des Formteils zwischen den elastischen Bandkanten erreicht werden kann. Auf diese Weise kann eine sichere Klemmung der Formteile erreicht werden, welche auch dann aufrecht erhalten wird, wenn die Dimensionen der Formteile innerhalb eines Toleranzbereiches variieren. Weiterhin kann durch die elastische Ausbildung der Bandkanten ein schonender Umgang mit den Formteilen erreicht werden, da über die Elastizität eine maximale Klemmkraft einstellbar ist. Zusätzlich wird die Klemmung der Formteile, insbesondere im Bereich einer Umlenkung des Klemmbandes sicherer, da durch die Umlenkung bedingte Verformungen des Klemmbandes ausgeglichen werden.

Die Ebenen der Klemmbänder sind dabei besonders bevorzugt parallel ausgebildet und liegen in einer besonders bevorzugten Variante in der identischen Ebene. Mit anderen Worten greifen die Bandkanten der beiden elastischen Klemmbänder das Formteil an gegenüberliegenden Punkten, welche auf der gleichen Höhe des Formteils liegen, an.

In einer besonders bevorzugten Ausbildung sind die Bandkanten so gestaltet, dass sie eine Klemmung des Formteils in einem vorgegebenen Bereich ermöglichen, beispielsweise am Umfang eines Behälterverschlusses im Bereich der Deckelfläche. So kann beispielsweise eine Beschädigung von empfindlicheren Bereichen des Behälterverschlusses, beispielsweise eine Beschädigung des Garantiebandes oder eine Verformung des Gewindebereiches, vermieden werden. Eine solche Ausbildung der Bandkante kann beispielsweise durch eine am Klemmband vorgesehene elastische Klemmlippe erreicht werden, die mit der Bandkante verbunden ist, wobei die Klemmlippe bevorzugt bezüglich Bandebene so ausgelenkt ist, dass der vorgegebene Bereich am Formteil zur Klemmung erreicht wird.

Durch die beschriebene Ausbildung des Klemmelementes sowie des Gegenelementes durch elastische Klemmbänder, welche das Formteil an den jeweiligen Bandkanten einklemmen, ist weiterhin eine flexible Führung der Vorrichtung von einer Ebene auf eine zweite Ebene möglich. Insbesondere lässt sich hier auf einfache Weise eine S-förmige Förderung herstellen, bei welcher die Formteile von einer ersten Ebene abgegriffen werden und dann auf die zweite Ebene gefördert werden.

Die Vorrichtung zum Fördern kann dabei die jeweils zu fördernden Formteile entweder in ihrer Ursprungsorientierung, so wie sie beispielsweise von einer vorgeschalteten Sortier- und Ausrichtvorrichtung angeliefert werden, oder aber in der umgekehrten, also um 180° gegenüber der Ausgangsposition gedrehten, Position auf der anderen Ebene ablegen. Die beschriebene Vorrichtung zum Fördern ist dabei so flexibel einsetzbar, dass die jeweiligen Formteile an der Ebene, an welcher sie an nachfolgende Verarbeitungsvorrichtungen, so wie beispielsweise einen Puffer, übergeben werden sollen, in einer im Wesentlichen frei einstellbaren Orientierung abgegeben werden können.

Die vorgeschlagene Vorrichtung zum Fördern ermöglicht weiterhin ein energieeffizientes Fördern der jeweiligen Formteile, da hier lediglich das Klemmband beziehungsweise die Klemmbänder mittels eines herkömmlichen Elektromotors angetrieben werden müssen. Ein solcher Direktantrieb über einen Elektromotor ist gegenüber einem Gebläse energiesparend und kann mittels eines Getriebes optimal ausgelegt werden.

Die Vorrichtung zum Fördern, so wie sie vorgeschlagen ist, ist weiterhin für unterschiedliche Anlagenkonzepte beziehungsweise für unterschiedliche Anlagengeometrien einfach auf unterschiedliche Förderhöhen einstellbar. Die vorgeschlagene Vorrichtung wird dabei bevorzugt so betrieben, dass sie mit Maschinengeschwindigkeit fördert. Die Formteile werden dann entsprechend der Zuführgeschwindigkeit beziehungsweise der Abführgeschwindigkeit und besonders bevorzugt entsprechend des jeweiligen Bedarfes an Formteilen, beispielsweise eines Verschließers, gefördert.

In einer besonders bevorzugten Variante ist zumindest im Bereich des Fördertrums des elastischen Klemmbandes eine zusätzliche Führung für die Formteile vorgesehen, derart, dass eine sichere Förderung der Formteile von der ersten Ebene auf die zweite Ebene erreicht werden kann. Auf die entsprechende Führung kann dann verzichtet werden, wenn die Formteile mittels des elastischen Klemmbandes so sicher geführt werden können, dass ein Verkanten oder Herausfallen der Formteile aus der Fördervorrichtung sicher verhindert werden kann.

Die Führung kann plattenförmig ausgebildet sein, so dass Formteile unterschiedlicher Höhe beziehungsweise unterschiedlicher Dimensionen in dem Förderer gefördert werden können, ohne dass ein Austausch der Führung notwendig wird. In einer Variante können die Führungen jedoch auch ausgetauscht werden, abhängig von der jeweiligen Dimensionierung der jeweiligen Formteile.

In der vorgeschlagenen Vorrichtung erfahren die jeweiligen Formteile entsprechend auch keine unnötigen Beschleunigungen und Zusammenstöße, sondern es findet ein geordneter Transport statt. Weiterhin ist auch kein Staudruck vor der Vorrichtung zum Fördern notwendig, denn die einzelnen, zu fördernden Formteile können auf der jeweiligen Zuführvorrichtung geordnet angeordnet sein und werden sanft im Bereich des Zulaufes von dem elastischen Klemmband übernommen.

Selbst wenn die Formteile dicht an dicht, also direkt aneinander liegend im Bereich der Zuführung ankommen, werden sie genau in dieser Form von dem elastischen Klemmband übernommen und sanft eingeklemmt, und dann weitertransportiert, ohne dass es zu Relativbewegungen der Formteile zueinander kommt.

Weiterhin vorteilhaft an der vorgeschlagenen Vorrichtung ist, dass die Vorrichtung zum Fördern vollständig dadurch entleerbar ist, dass der Zulauf unterbrochen wird und entsprechend sämtliche Formteile, welche noch durch das elastische Klemmband eingeklemmt sind, zum Auslauf transportiert werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung einer Vorrichtung zum Fördern von Formteilen,
- Figur 2: eine Ausschnittsdarstellung des Zulaufbereiches der Vorrichtung aus Figur 1,
- Figur 3: eine perspektivische Draufsicht auf den in Figur 2 gezeigten Zulaufbereich;
- Figur 4: eine perspektivische Draufsicht auf den Auslaufbereich der Vorrichtung zum Fördern aus den vorhergehenden Figuren;
- Figur 5: eine weitere schematische perspektivische Draufsicht auf den Auslaufbereich; und
- Figur 6: eine schematische Darstellung eines Schnitts durch eine weitere Vorrichtung zum Fördern von Formteilen mit einer Klemmlippe.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

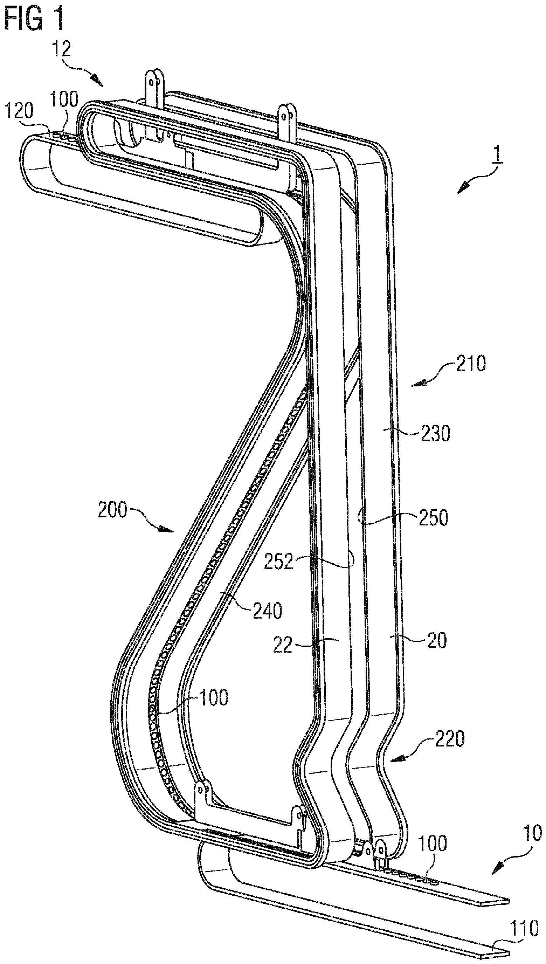

Figur 1 zeigt eine Vorrichtung 1 zum Fördern von schematisch angedeuteten Formteilen 100, welche hier in Form von Kunststoffschraubverschlüssen gezeigt sind, welche zum Aufschrauben und Verschließen von PET-Kunststoffflaschen vorgesehen sind. Die Vorrichtung 1 überbrückt einen vertikalen Höhenunterschied zwischen einem Zulaufbereich 10 und einem Auslaufbereich 12. Die Formteile 100 werden auf einer ersten Maschinenebene über eine Zulaufvorrichtung 110 in Form eines Förderbandes zugeführt und über eine Auslaufvorrichtung 120 in Form eines Förderbandes auf der neuen Maschinenebene abgeführt.

Die Vorrichtung 1 umfasst ein elastisches Klemmband 20, welches, wie sich aus der Figur 1 ergibt, endlos ausgebildet ist. Ein Gegenelement in Form eines zweiten Klemmbandes 22 ist ebenfalls vorgesehen, wobei das erste elastische Klemmband 20 und das zweite elastische Klemmband 22 im Wesentlichen parallel zueinander geführt werden.

Das Fördertrum 200 der elastischen Klemmbänder 20, 22 ist S-förmig geführt, derart, dass es die von der Zulaufvorrichtung 110 zugeführten Formteile 100 aufnimmt, und in einem S-förmigen Bogen auf die Ablaufvorrichtung 120, welche sich auf einem höheren Niveau als die Zulaufvorrichtung 110 befindet, anhebt. Durch die S-förmige Führung des Fördertrums 200 wird erreicht, dass die Orientierung der Formteile 100, welche über die Zulaufvorrichtung 110, beispielsweise von einer Sortier- und Ausrichtstation, zugeführt werden, beim Ablegen auf der Ablaufvorrichtung 120 im Wesentlichen gleich bleibt. Mit anderen Worten ist beispielsweise bei einer Zuführung von Formteilen 100 in Form von Kunststoffbehälterverschlüssen, welche über die Zulaufvorrichtung 110 so zugeführt werden, dass die Öffnung nach oben zeigt, ein Ablegen dieser Formteile 100 auf der Ablaufvorrichtung 120 ebenfalls in einer Orientierung, in welcher die Öffnungen der einzelnen Kunststoffschraubverschlüsse nach oben zeigen, möglich und wird auf die gezeigte Weise erreicht.

Das Obertrum 210 der elastischen Klemmbänder 20, 22 wird im Wesentlichen auf eine beliebige Weise zurückgeführt, welche für die jeweiligen Platzverhältnisse in der Getränkeabfüllanlage geeignet ist. In dem in den Figuren gezeigten Ausführungsbeispiel wird das Obertrum 210 dabei in einem rechten Winkel von dem Auslaufbereich 12 wieder zum Zulaufbereich 10 geleitet, wobei eine Spannvorrichtung 220 schematisch angedeutet ist.

Die elastischen Klemmbänder 20, 22 weisen jeweils eine Oberseite 230 sowie eine Unterseite 240 sowie eine Bandkante 250 auf. Die Bandkante 250 liegt in der durch das elastische Klemmband 20 definierten Bandebene und liegt auf der nach innen zeigenden Seite des elastischen Klemmbandes 20. Die Ausprägung der Bandkante 250 in einer Richtung senkrecht zur Ebene des elastischen Klemmbandes 20 ist typischerweise sehr gering, verglichen zu der Breite des elastischen Klemmbandes 20.

Die Bandkante 250 dient dazu, die über die Zulaufvorrichtung 110 zugeführten Formteile 100 gegen ein entsprechendes Gegenelement einzuklemmen. Das Gegenelement wird in dem in den Figuren gezeigten Ausführungsbeispiel durch das zweite Klemmband 22 bereitgestellt, welches ebenfalls eine innen liegende Bandkante 252 aufweist.

Die Bandkanten 250, 252 der elastischen Klemmbänder 20, 22 sind bevorzugt ebenfalls elastisch ausgebildet, so dass eine elastische Klemmung des Formteils 100 zwischen den elastischen Bandkanten 250, 252 erreicht werden kann.

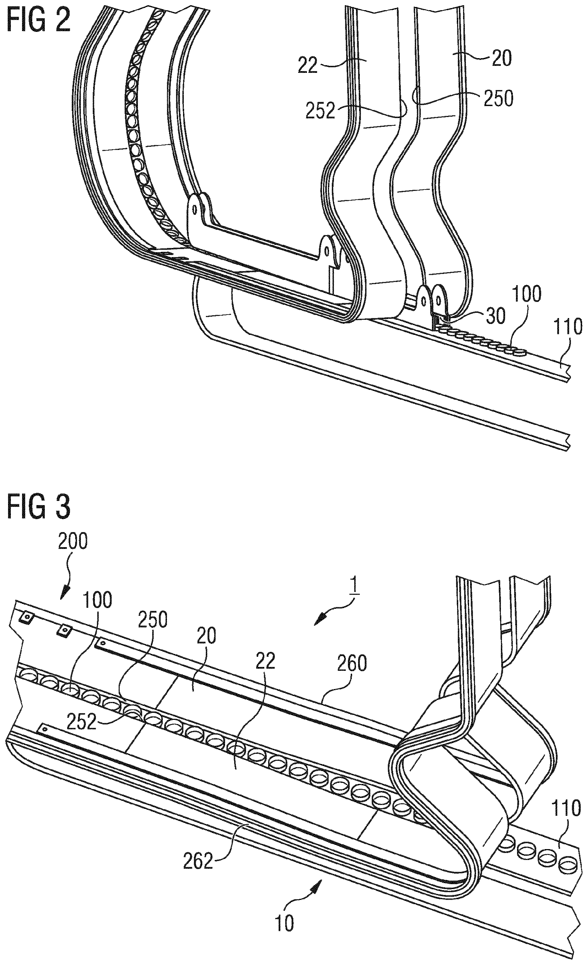

Diese Ausprägung ist in Figur 3 noch einmal besonders deutlich zu erkennen, in welcher die jeweiligen Formteile 100 zwischen der Bandkante 250 des ersten elastischen Klemmbandes 20 und der Bandkante 252 des zweiten elastischen Klemmbandes 22 eingeklemmt werden. Hierbei ist im Bereich des Fördertrums 200 eine parallele Führung des ersten elastischen Klemmbandes 20 und des zweiten elastischen Klemmbandes 22 vorgesehen.

Figur 3 zeigt darüber hinaus noch den Einlaufbereich 10, in welchem, wie sich unmittelbar erkennen lässt, die beiden Bandkanten 250, 252 im Wesentlichen keilförmig zueinander geführt werden, derart, dass die über die Zulaufvorrichtung 110 zugeführten Formteile 100 sanft von der Seite her gegriffen werden.

Eine entsprechende Führungsvorrichtung, welche die elastischen Klemmbänder 20, 22 in der keilförmigen Form führt, greift an den Außenkanten 260 und 262 der elastischen Klemmbänder 20, 22 an und ermöglicht auf diese Weise ein geführtes Öffnen und Schließen des sich zwischen den elastischen Bandkanten 250, 252 ergebenden Klemmspalts.

In den Figuren 1 und 2 ist weiterhin eine Führung 30 gezeigt, mittels welcher die über die Zulaufvorrichtung 110 zugeführten Formteile 100 zunächst in eine vorgegebene Reihung und räumliche Orientierung gebracht werden. Die Führung 30 übergibt dann die entsprechend ausgerichteten Formteile 100 an den zwischen den Bandkanten 250 und 252 erzeugten Klemmspalt.

Wie sich aus den in den Figuren 2 und 3 gezeigten Darstellungen unmittelbar ergibt, stoßen die Formteile 100 während des Förderprozesses nicht unnötig aneinander an, so dass ein verschleißarmes Fördern der Formteile 100 möglich wird.

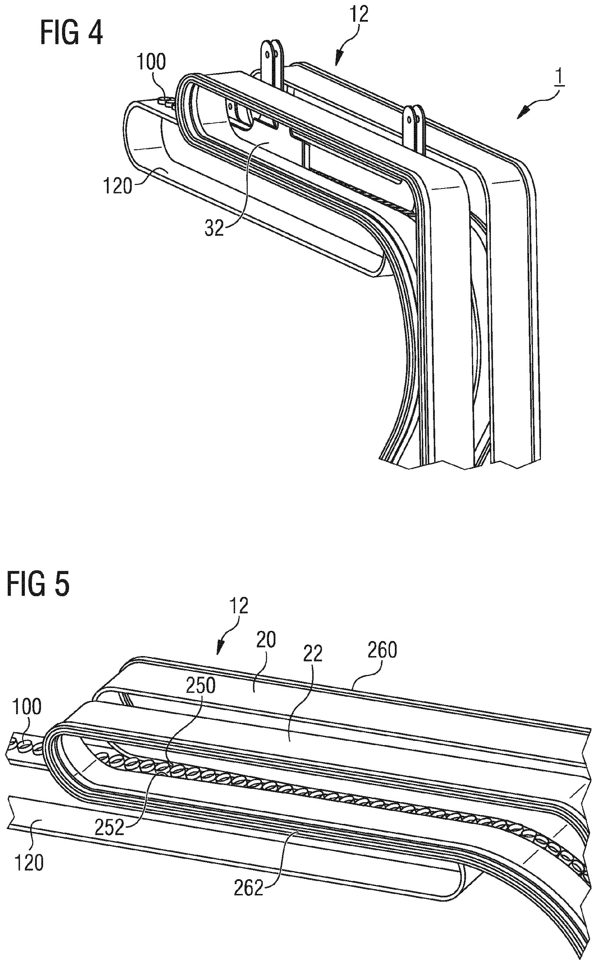

In den Figuren 4 und 5 ist der Auslaufbereich 12 der Vorrichtung 1 gezeigt. Die Ausbildung ist komplementär zu der im Zulaufbereich 10 gezeigten Ausbildung, dahingehend, dass der Klemmspalt zwischen den beiden elastischen Klemmbändern 20, 22, welcher durch die entsprechenden Bandkanten 250, 252 erzeugt wird, im Bereich des Auslaufes 12 wieder keilförmig geöffnet wird und sich die Bandkanten 250, 252 entsprechend leicht diagonal bezüglich der Förderrichtung bewegen. Eine Führung 32, welche die Formteile 100 auf die Ablaufvorrichtung 120 übergibt, ist im Klemmspalt vorgesehen. Die Führung 32 sorgt dafür, dass im Auslaufbereich 12 ebenfalls eine geordnete Reihung und vorgegebene räumliche Orientierung der Formteile 100 erreicht wird.

Das Öffnen des Klemmspaltes zwischen den beiden elastischen Klemmbändern 20, 22 beziehungsweise deren Bandkanten 250, 252 wird wiederum über eine hier nicht gezeigte Führungsvorrichtung übernommen, welche wiederum an den äußeren Bandkanten 260, 262 der elastischen Klemmbänder 20, 22 angreift.

Aus den Figuren 3 und 5 ist besonders gut erkennbar, dass durch das sanfte Einklemmen der Formteile 100 zwischen den elastischen Klemmbändern 20, 22 durch das Verringern des Bandspaltes zwischen den Bandkanten 250, 252 eine besonders sanfte Handhabung der jeweiligen Formteile 100 ermöglicht wird. Entsprechend können die Formteile 100 sanft von der Zulaufvorrichtung 110 abgenommen werden und genauso sanft auf die Ablaufvorrichtung 120 aufgelegt werden, ohne dass es zu nennenswerten Relativbewegungen zwischen den Formteilen 100, der Zulaufvorrichtung 110, den beiden elastischen Klemmbändern 20, 22 oder der Ablaufvorrichtung 120 kommt. Da die Formteile 100 entsprechend ohne Relativbewegung auf den genannten beziehungsweise bezüglich der genannten Elemente geführt werden, findet im Wesentlichen kein Verschleiß der Formteile statt. Die Formteile 100 stoßen auch nicht aneinander an, so dass auch hier ein Verschleiß reduziert beziehungsweise vollständig vermieden werden kann. Durch die vorgeschlagene Vorrichtung zum Fördern der Formteile 100 kann entsprechend ein verschleißarmes beziehungsweise verschleißfreies Fördern der Formteile 100 von einer ersten Anlagenebene auf eine zweite Anlagenebene erreicht werden.

Dadurch, dass die beiden Klemmbänder 20, 22 elastisch ausgebildet sind, können auch Schwankungen in den Dimensionen der Formteile 100 durch das elastische Material gut ausgeglichen werden. Durch die Verwendung des elastischen Materials der Klemmbänder 20, 22 tauchen die jeweiligen Formteile entsprechend dann nur unterschiedlich tief in die Bandkanten 250, 252 ein.

Bei einer Veränderung der Gesamtgeometrie der zu fördernden Formteile 100, beispielsweise bei einer Veränderung des Durchmessers von zu fördernden Kunststoffschraubverschlüssen in eine Getränkeabfüllanlage, kann die Spaltbreite zwischen den Bandkanten 250, 252 entsprechend einfach angepasst werden, so dass eine Umrüstung einfach und zügig möglich ist.

Unterschiedliche Höhen der Formteile 100, beispielsweise unterschiedliche Höhen von Behälterschraubverschlüssen als Fördergut bei gleichem Durchmesser, erfordern im Prinzip keine Änderung der Justage der Fördervorrichtung 1. Vorteilhaft kann es aber sein, den Abstand zwischen dem Obertrum der Zulaufvorrichtung 110 und den Bandkanten 250, 252, sowie den Abstand zwischen dem Obertrum der Ablaufvorrichtung 120 und den entsprechenden Bandkanten 250, 252 im Auslaufbereich 12 so einzustellen, dass ein Angreifen der Bandkanten 250, 252 an den unterschiedlich hohen Kunststoffschraubverschlüssen im Wesentlichen im Bereich der Massenschwerpunktebene der jeweiligen Verschlüsse stattfindet. Auf diese Weise wird ein möglichst ausgeglichenes Transportverhalten erreicht und ein Umkippen der geförderten Verschlüsse wird verhindert. Wenn die Klemmkraft zwischen den Bandkanten 250, 252 jedoch hoch genug gewählt wird, kann auf eine solche Justage auch verzichtet werden und mit der gleichen Einstellung beziehungsweise gleichen Justierung der Vorrichtung die unterschiedlich hohen Verschlüsse gefördert werden.

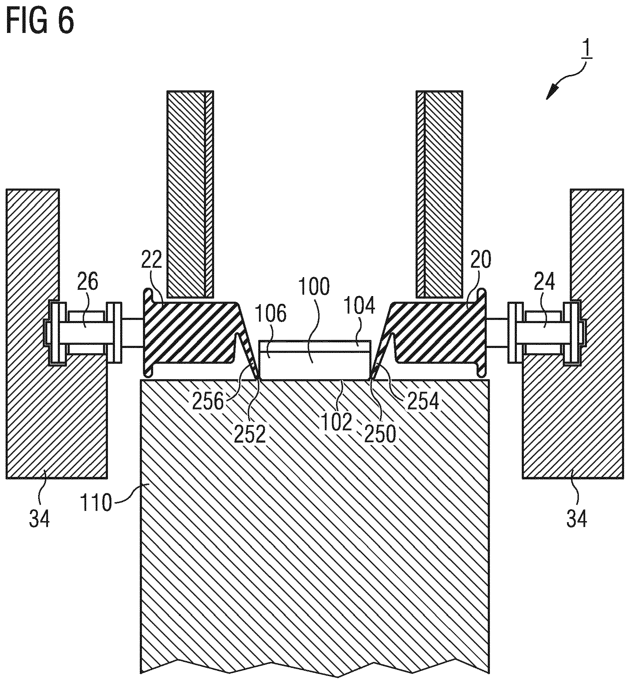

In Figur 6 ist in einer schematischen Schnittdarstellung eine weitere Vorrichtung 1 zum Fördern von Formteilen 100 gezeigt. Die Vorrichtung 1 umfasst wiederum Klemmbänder 20, 22, zwischen welchen das Formteil 100 geklemmt und gefördert wird. Die Klemmbänder 20, 22 werden in dem gezeigten Ausführungsbeispiel über eine Rollenkette mit Rollen 24, 26, welche in entsprechenden Führungsschienen 34 geführt werden, gehalten und entlang der Fördertrajektorie geführt.

Das Formteil 100 ist hier schematisch in Form eines Behälterverschlusses gezeigt, wobei der Behälterverschluss unterschiedliche Bereiche aufweist. Ein Deckelbereich 102 ist vorgesehen, welcher zum eigentlichen Verschluss eines zu verschließenden Behälters dient. Ein Gewindebereich 106 ist vorgesehen, welcher zur Befestigung und zum Aufschrauben des Behälterverschlusses auf den zu verschließenden Behälter dient und welcher ein Innengewinde umfasst. Darüber hinaus ist auch ein Garantieband 104 vorgesehen, welches mit dem übrigen Behälterverschluss über abreißbare Verbindungsstege verbunden ist und welches dafür sorgt, dass ein Verbraucher erkennen kann, ob der von ihm erworbene Behälter schon einmal geöffnet wurde. Durch die abreißbare Anbringung des Garantiebandes 104 an dem übrigen Behälterverschluss ist das Garantieband 104 besonders empfindlich gegen Berührungen. Aber auch der Gewindebereich 106 ist einfach verformbar. Relativ zu den genannten Bereichen des Formteils 100 ist der Deckelbereich 102 recht stabil und unempfindlich gegen Verformungen.

Um eine möglichst schonende Förderung zu erreichen, muss vermieden werden, dass auf die empfindlichen Bereiche des Formteils 100 ein erhöhter Druck ausgeübt wird. In dem in Figur 6 gezeigten Ausführungsbeispiel werden hierzu Klemmlippen 254, 256 mit den Bandkanten 250, 252 verbunden. Die Klemmlippen 254, 256 sind so angeordnet, dass sie gegenüber der durch das Klemmband 20, 22 definierten Ebene nach unten hin ausgelenkt sind, so dass sie entsprechend mit dem unempfindlichen Bereich des Formteils 100, also hier dem Deckelbereich 102, in Kontakt treten. Durch den Einsatz der Klemmlippen 254, 256 kann entsprechend ein zuverlässiges Klemmen erreicht werden, welches gleichzeitig ein besonders schonendes Fördern der Formteile 100 ermöglicht. Insbesondere kann durch die Klemmlippen 254, 256 ein Abreißen des Garantiebandes 104 oder eine Verformung des Gewindebereiches 106 während des Förderns vermieden werden. Durch die Verwendung der Klemmlippen 254, 256 können weiterhin auch Toleranzen in den Dimensionen des jeweiligen Formteils 100 einfacher ausgeglichen werden, so dass ein sicheres Fördern auch unterschiedlich großer Formteile 100 ohne aufwändige Nachjustage des Abstandes zwischen den Bandkanten 250, 252 erreicht werden kann.

Das Formteil 100 wird, auf seinem Deckelbereich 102 liegend, mittels einer Zulaufvorrichtung 110 der Vorrichtung 1 zum Fördern zugefördert und dann von den an den Klemmlippen 254, 256 vorgesehenen Bandkanten 250, 252 sanft übernommen und dann weitergefördert. Durch die definierte Zuführung der Formteile 100 zu der Vorrichtung 1 zum Fördern kann entsprechend auch erreicht werden, dass die Formteile 100 in vorgegebenen Bereichen - also den Deckelbereichen 102 - geklemmt werden, so dass eine Verformung beziehungsweise ein Abreißen von Teilen vermieden werden kann.

Soweit anwendbar, können alle einzelnen Merkmale, die in den einzelnen Ausführungsbeispielen dargestellt sind, miteinander kombiniert und/oder ausgetauscht werden, ohne den durch die Ansprüche begrenzten Schutzbereich der Erfindung zu verlassen.

### Bezugszeichenliste

- 1: Vorrichtung
- 10: Zulaufbereich
- 12: Auslaufbereich
- 100: Formteil
- 102: Deckelbereich
- 104: Gewindebereich
- 106: Garantieband
- 110: Zulaufvorrichtung
- 120: Ablaufvorrichtung
- 20: elastisches Klemmband
- 22: elastisches Klemmband
- 24: Rollen
- 26: Rollen
- 200: Fördertrum
- 210: Obertrum
- 220: Spannvorrichtung
- 230: Oberseite des Klemmbandes
- 240: Unterseite des Klemmbandes
- 250: Bandkante
- 252: Bandkante
- 254: Klemmlippe
- 256: Klemmlippe
- 260: Außenkante
- 262: Außenkante
- 30: Führung
- 32: Führung
- 34: Schiene zur Aufnahme von Rollen 24, 26

## Patentansprüche

1. Vorrichtung (1) zum Fördern mindestens eines Behälterverschlusses (100) in einer Getränkeabfüllanlage, umfassend mindestens ein elastisches, endloses Klemmband (20) zum Mitnehmen des mindestens einen Behälterverschlusses (100), wobei das elastische Klemmband (20) eine Bandkante (250) und eine Breite aufweist und der mindestens eine Behälterverschluss (100) zwischen der Bandkante (250) des elastischen Klemmbandes (20) und einem Gegenelement (252) der Vorrichtung förderbar ist, wobei das Klemmband mit seiner Bandkante (250) den Behälterverschluss gegen das Gegenelement (252) einklemmt und damit förderbar macht, wobei ein Zulaufbereich (10) zur Übernahme eines über eine Zulaufvorrichtung (110) zugeführten Behälterverschlusses (100) zwischen die Bandkante (250) und dem Gegenelement (252) vorgesehen ist, und in dem Zulaufbereich (10) die Bandkante (250) keilförmig und/oder diagonal so zur Förderrichtung geführt ist, dass eine Klemmwirkung zwischen der Bandkante (250) und dem Gegenelement (252) auf das Formelement (100) ausgeübt wird
**dadurch gekennzeichnet, dass**
die Höhe der Bandkante (250) senkrecht zur Ebene des Klemmbandes (20) geringer ist, als die Breite des Klemmbandes (20).

2. Vorrichtung (1) gemäß Anspruch 1, **dadurch gekennzeichnet, dass** das Gegenelement (252) durch eine Bandkante eines zweiten elastischen Klemmbands (22) ausgebildet ist, und der Behälterverschluss (100) bevorzugt zwischen der Bandkante (250) des ersten elastischen Klemmbandes (20) und der Bandkante (252) des zweiten elastischen Klemmbandes (22) förderbar ist.

3. Vorrichtung (1) gemäß Anspruch 1 oder 2, **dadurch gekennzeichnet, dass** das elastische Klemmband (20, 22) eine elastische Bandkante (250, 252) zum Klemmen des mindestens einen Behälterverschlusses (100) aufweist.

4. Vorrichtung (1) gemäß einem der vorstehenden Ansprüche, **dadurch gekennzeichnet, dass** eine Führung (30) zur Führung der Behälterverschlüsse (100) im Einlaufbereich (10) vorgesehen ist, um die Behälterverschlüsse (100) der Klemmung zwischen der Bandkante (250) und dem Gegenelement ausgerichtet zuzuführen.

5. Vorrichtung (1) gemäß einem der vorstehenden Ansprüche, **dadurch gekennzeichnet, dass** ein Auslaufbereich (12) zur Übergabe eines zwischen der Bandkante (250) und dem Gegenelement geförderten Behälterverschlusses (100) auf eine Auslaufvorrichtung (120) vorgesehen ist, und in dem Auslaufbereich (12) die Bandkante (250) bevorzugt keilförmig und/oder diagonal so zur Förderrichtung geführt ist, dass eine Klemmwirkung zwischen der Bandkante (250) und dem Gegenelement auf das Formelement (100) gelöst wird.

6. Vorrichtung (1) gemäß Anspruch 5, **dadurch gekennzeichnet, dass** mindestens eine Führung (32) zur Führung der Behälterverschlüsse (100) im Auslaufbereich (12) vorgesehen ist, um die Behälterverschlüsse (100) der Auslaufvorrichtung (120) ausgerichtet zu übergeben.

7. Vorrichtung (1) gemäß einem der vorstehenden Ansprüche, **dadurch gekennzeichnet, dass** eine an dem Klemmband (20, 22) angeordnete Klemmlippe (254, 256) mit der Bandkante (250, 252) verbunden ist.

8. Vorrichtung (1) gemäß Anspruch 7, **dadurch gekennzeichnet, dass** zwei Klemmlippen (254, 256) vorgesehen sind, welche jeweils mit einer Bandkante (250, 252) verbunden sind und zwischen welchen der Behälterverschluss (100) förderbar ist.

9. Vorrichtung (1) gemäß Anspruch 7 oder 8, **dadurch gekennzeichnet, dass** mindestens eine Klemmlippe (254, 256) aus der durch das Klemmband (20, 22) definierten Bandebene ausgelenkt ist, um mit einem vorbestimmten Bereich des Behälterverschlusses (100) in Eingriff zu kommen.

## Claims

1. Device (1) for conveying at least one container closure (100) in a beverage bottling machine, comprising at least one elastic, continuous clamping band (20) for carrying the at least one container closure (100), wherein the elastic clamping band (20) has a band edge (250) and a width, and the at least one container closure (100) can be conveyed between the band edge (250) of the elastic clamping band (20) and a counter element (252) of the device, wherein the clamping band with its band edge (250) clamps the container closure against the counter element (252) and thus makes it conveyable, wherein a feed area (10) for taking over a container closure (100) supplied via a feed device (110) is provided between the band edge (250) and the counter element (252) and in the feed area (10), the band edge (250) is guided wedge-shaped and/or diagonally to the conveying direction so that a clamping effect is exerted between the band edge (250) and the counter element (252) on the moulded element (100),
**characterised in that**
the height of the band edge (250) perpendicular to the plane of the clamping band (20) is smaller than the width of the clamping band (20).

2. Device (1) according to claim 1, **characterised in that** the counter element (252) is formed by a band edge of a second elastic clamping band (22) and the container closure (100) can preferably be conveyed between the band edge (250) of the first elastic clamping band (20) and the band edge (252) of the second elastic clamping band (22).

3. Device (1) according to claim 1 or 2, **characterised in that** the elastic clamping band (20, 22) has an elastic band edge (250, 252) for clamping the at least one container closure (100).

4. Device (1) according to any of the preceding claims, **characterised in that** a guide (30) for guiding the container closure (100) is provided in the inlet area (10), in order to supply the container closures (100) in an aligned manner for clamping between the band edge (250) and the counter element.

5. Device (1) according to any of the preceding claims, **characterised in that** a discharge area (12) for transferring a container closure (100) conveyed between the band edge (250) and the counter element to a discharge device (120) is provided, and in the discharge area (12) the band edge (250) is guided preferably wedge-shaped and/or diagonally to the conveying direction so that a clamping effect between the band edge (250) and the counter element on the moulded element (100) is released.

6. Device (1) according to claim 5, **characterised in that** at least one guide (32) is provided for guiding the container closures (100) in the discharge area (12), in order to transfer the container closures (100) of the discharge device (120) in an aligned manner.

7. Device (1) according to any of the preceding claims, **characterised in that** a clamping lip (254, 256) arranged on the clamping band (20, 22) is connected to the band edge (250, 252).

8. Device (1) according to claim 7, **characterised in that** two clamping lips (254, 256) are provided which are each connected to a band edge (250, 252) and between which the container closure (100) can be conveyed.

9. Device (1) according to claim 7 or 8, **characterised in that** at least one clamping lip (254, 256) is diverted from the band plane defined by the clamping band (20, 22) in order to engage with a predetermined area of the container closure (100).

## Revendications

1. Dispositif (1) pour l'acheminement au moins d'une fermeture de récipient (100) dans une installation de soutirage de boissons, comprenant au moins un ruban de serrage (20) élastique continu pour entraîner la au moins une fermeture de récipient (100), dans lequel le ruban de serrage élastique (20) présente une arête de ruban (250) et une largeur et la au moins une fermeture de récipient (100) peut être acheminée entre l'arête du ruban de serrage élastique (20) et un contre-élément (252) du dispositif, dans lequel le ruban de serrage serre par son arête de ruban (250) la fermeture de récipient contre le contre-élément (252) et permet ainsi son acheminement, dans lequel il est prévu une zone d'amenée (10) pour transférer une fermeture de récipient (100) acheminée via un dispositif d' amené (110) entre l'arête de ruban (250) et le contre-élément (252) et, dans la zone d'amenée (10), l'arête de ruban (250) est guidée en forme de coin et/ou en diagonale par rapport à la direction d'acheminement en sorte que soit exercé un effet de serrage entre l'arête de ruban (250) et le contre-élément (252) sur l'élément moulé (100),
**caractérisé en ce que**
la hauteur de l'arête de ruban (250) perpendiculairement au plan du ruban de serrage (20) est plus petite que la largeur du ruban de serrage (20).

2. Dispositif (1) selon la revendication 1, **caractérisé en ce que** le contre-élément (252) est formé par une arête de ruban d'un second ruban de serrage élastique (22), et la fermeture de récipient (100) peut être acheminée de préférence entre l'arête de ruban (250) du premier ruban de serrage élastique (20) et l'arête de ruban (252) du second ruban de serrage élastique (22).

3. Dispositif (1) selon la revendication 1 ou 2, **caractérisé en ce que** le ruban de serrage élastique (20, 22) présente un arête de ruban élastique (250, 252) pour serrer la au moins une fermeture de récipient (100).

4. Dispositif (1) selon l'une quelconque des revendications précédentes, **caractérisé en ce qu'il** est prévu un guidage (30) pour guider les fermetures de récipients (100) dans la zone d'amenée (10) afin d'acheminer les fermetures de récipients (100) au serrage dans l'alignement entre le ruban de serrage (250) et le contre-élément.

5. Dispositif (1) selon l'une quelconque des revendications précédentes, **caractérisé en ce qu'il** est prévu une zone de décharge (12) pour transférer une fermeture de récipient (100) acheminée entre l'arête de ruban (250) et le contre-élément sur un dispositif de décharge (120) et, dans la zone de décharge (12), l'arête de ruban (250) est guidée de préférence en forme de coin et/ou en diagonale par rapport à la direction d' acheminement en sorte qu'un effet de serrage entre l'arête de ruban (250) et le contre-élément soit desserré sur l'élément moulé (100).

6. Dispositif (1) selon la revendication 5, **caractérisé en ce qu'il** est prévu au moins un guidage (32) pour guider les fermetures de récipients (100) dans la zone de décharge (12) pour transférer les fermetures de récipients (100) dans l'alignement avec le dispositif de décharge (120).

7. Dispositif (1) selon l'une quelconque des revendications précédentes, **caractérisé en ce qu'une** lèvre de serrage (254, 256) agencée sur le ruban de serrage (20, 22) est reliée à l'arête de ruban (250, 252).

8. Dispositif (1) selon la revendication 7, **caractérisé en ce qu'il** est prévu deux lèvres de serrage (254, 256) qui sont reliées respectivement à un arête de ruban (250, 252) et entre lesquelles la fermeture de récipient (100) peut être acheminée.

9. Dispositif (1) selon la revendication 7 ou 8, **caractérisé en ce qu'au** moins une lèvre de serrage (254, 256) est déviée du plan du ruban défini par le ruban de serrage (20, 22) pour venir en prise avec une zone prédéterminée de la fermeture de récipient (100).
